# EUROPÄISCHE PATENTANMELDUNG

(11) **EP 4 443 446 A2**
(43) Veröffentlichungstag der Anmeldung: **09.10.2024**
(21) Anmeldenummer: 24191238.5
(22) Anmeldetag: 10.07.2018
(51) Int. Cl.: H01B 7/32

(54) **ELEKTROKABEL FÜR DIE STROMVERSORGUNG VON FLUGZEUGEN, FAHRZEUGEN, SCHIFFEN ODER ANDEREN EINRICHTUNGEN**

(30) Priorität: 14.07.2017 CH 9242017
(62) Teilanmeldung aus: 18740185.6
(71) Anmelder: Studer Aeronautical AG, 4658 Däniken (CH)
(72) Erfinder: STUDER, Christoph, 5014 Gretzenbach (CH); STUDER, Geraldine, 5014 Gretzenbach (CH)
(74) Vertreter: Luchs, Willi

(57) **Zusammenfassung**

Ein Stecker (80) für ein Elektrokabel für die Stromversorgung von Flugzeugen, Schienenfahrzeugen, Kraftfahrzeugen, Schiffen oder anderen Einrichtungen, ist mit einem Gehäuse (82) versehen, das einen in eine Steckdose einsteckbaren Gehäuseteil mit Einzelsteckern (83) aufweist. Das Elektrokabel mit dem Stecker ist als Ein- oder Mehrleiterkabel ausgebildet, bei dem ein oder mehrere Stromleiter mit wenigstens einer Isolation sowie ein ein- oder mehrschichtiger Aussenmantel vorgesehen sind. Dem Aussenmantel des Elektrokabels sind vorzugsweise über den gesamten Umfang verteilte, nach aussen vorstehende Verstärkungselemente zugeordnet. Auf der Aussenseite des Gehäuses (82) des jeweiligen Steckers (80) sind Verstärkungselemente (81) mit einer rippenartigen Struktur nach aussen zum jeweiligen Gehäuse (82) vorstehend angeordnet. Der in die Steckdose einsteckbare Gehäuseteil mit den Einzelsteckern (83) ist ohne diese Verstärkungselemente ausgebildet. Mit dieser Ausbildung des Steckers (80) wird seine Haltbarkeit gesteigert und starke Erwärmungen oder sogar Verbrennungen beim Benutzer verhindert.

## Beschreibung

Die Erfindung betrifft einen Stecker für die Stromversorgung von Flugzeugen, Schienenfahrzeugen, Kraftfahrzeugen, Schiffen oder anderen Einrichtungen nach dem Oberbegriff des Anspruchs 1, sowie ein Elektrokabel nach dem Oberbegriff des Anspruchs 11.

Solche Elektrokabel mit Steckern werden bei der Versorgung von elektrischer Energie bei Flugzeugen, Schienenfahrzeugen, Automobilen, Kraftfahrzeugen oder Schiffen etc. eingesetzt, welche vorzugsweise an eine Gleichstrom- oder an eine Wechselstromquelle angeschlossen werden. Die Versorgung dient zum Beispiel dem Laden der Batterien und/oder der gleichzeitigen Speisung des Bordnetzes. Es wird normalerweise aus dem Versorgungsnetz eine Wechselspannung von 50 bzw. 60 Hz bezogen und danach in die gewünschte Spannungsform konvertiert.

Die Versorgungsspannung beträgt bei kleineren Flugzeugen in der Regel 28 Volt mit Gleichstrom, währenddem bei grossen Passagierflugzeugen oder Frachtern eine Wechselspannung von 115 bzw. 200 Volt bei einer Frequenz von 400Hz oder noch höheren Frequenzen vorgesehen ist.

Neuerdings werden insbesondere bei Militärflugzeugen erhöhte Versorgungsspannungen von jeweils 270 V Gleichstrom verwendet, was den Bezug grösserer Leistungen vereinfacht, aber negative Konsequenzen für den Personenschutz und die Beherrschung von Kurzschlüssen bewirkt.

Bekannte Elektrokabel zum Laden von Batterien bei Flugzeugen oder ähnlichem sind so ausgebildet, dass bei Gleichspannung entweder ein einzelnes Kabel als Plus- und eines als Minusleiter als billigste Lösung, die jeweils abschnittweise zusammengebunden werden, oder elektrisch besser, wenn der Plus- als Vorleiter und der Minus- als Rückleiter jeweils abwechselnd und miteinander verdrillt in zwei bzw. mehrere Einzelleiter aufgeteilt verwendet werden. Dieser Aufbau ergibt einen geringeren Induktivitätsbelag und damit verbunden ist ein geringerer Spannungsverlust bei Wechselstrom, aber ein gutes Übertragungsverhalten bezüglich EMV, selbst wenn Störungen überlagert sind. Bei Gleichstrom haben zudem zwei parallele unverdrillte Einzelleiter die unangenehme Eigenschaft, dass ferritische Teile einer Magnetisierung ausgesetzt sind. Bessere Kabel mit kleinen Abständen zwischen den Plus- und Minus-Leitern und dank der Verseilung derselben erreichen eine kleine Induktivität und dank dem symmetrischen Aufbau auch eine gleichmässige Stromverteilung auf die einzelnen parallel geschalteten Einzelleiter. Kabel mit diesem Aufbau benötigen jedoch für entsprechend grosse Ströme auch entsprechend grosse Kupferquerschnitte zur Begrenzung der Verluste und des Spannungsabfalls.

Falls das Spannungssystem so aufgebaut ist, dass die Aussenhaut des Fahr- oder Flugzeuges in der Mitte zwischen dem positiven und dem negativen Pol liegt, so wird der Zentrumsleiter aus 2 n positiven und negativen isolierten Leitern aufgebaut und der konzentrische Schirm an Masse gelegt. So kann wiederum der Personenschutz gewährleistet werden.

Es gibt Anwendungen für die Übertragung grosser Lade-Ströme, bei denen die Begrenzung der Temperaturerwärmung so gelöst ist, dass im Kabelinnern mehrere Röhrchen für die Zirkulation von Kühl- Flüssigkeit hindurchgeführt sind, welche die Wärme aus dem Kabel wegführen und damit ermöglichen, dass die Kabeltemperatur vorgegebene Werte nicht überschreitet. Diese Flüssigkeitskühlung ist jedoch ein erschwerender Faktor bezüglich Komplexität und Gestehungs- sowie Unterhaltskosten solcher Kabel.

Wenn immer möglich, vermeidet man es daher, leitende Flüssigkeiten und Elektrizität im gleichen Andienkabel zu führen, zum Beispiel Wasser, welches elektrisch leitend ist. Da im Flugzeugbereich auch vielfach fahrbare Aggregate eingesetzt werden, die Witterungen, wie Frost sowie Erschütterungen ausgesetzt sind, wird auf Flüssigkeiten im Kabel und deren Kühlsysteme wenn immer möglich verzichtet, da sich damit die Systeme komplizieren und eventuelle Leckagen überwacht werden müssten.

Bei einem bekannten Stecker gemäss der Druckschrift US2014/0227909 weist ein mit einem Gegenstecker verbindendbarer Steckverbinder ein Steckergehäuse auf, das einen Anschluss und Befestigungselemente zum Befestigen des Anschlusses aufnimmt, so dass ein Anschlagelement an dem Endabschnitt des Steckergehäuses entfernt vom Gegenstecker positioniert ist und an dem Befestigungselement anliegt, das im Endabschnitt des Steckergehäuses aufgenommen ist. Damit lässt sich der Steckverbinder in kurzer Zeit montieren bzw. demontieren. Es sind beim Griffabschnitt des Steckers mehrere gerundete Erhöhungen vorgesehen, die ein Erweitern des Aussenumfangs des Gehäuses bilden.

Der Erfindung liegt die Aufgabe zu Grunde, einen Stecker und ein mit diesem verbundenes Elektrokabel nach der eingangs erwähnten Gattung derart zu verbessern, dass mit diesem bei vorausgesetzter optimaler Aufteilung der Ströme auf die einzelnen Leiter beim Benutzen des Kabels verbesserte Eigenschaften in Bezug auf die Entstehung eines magnetischen Feldes bei Gleichstrom, eine weitgehende Verhinderung einer Überhitzung bzw. ein verbesserter Personenschutz bei einer Beschädigung des Aussenmantels desselben erreicht werden, sowie auch seine mechanische Belastung dauerhaft verbessert wird.

Die Aufgabe ist erfindungsgemäss nach den Merkmalen des Anspruchs 1 gelöst.

Mit dieser dem Aussenmantel des Steckers sowie des Elektrokabels zugeordneten vorzugsweise über den gesamten Umfang verteilten, nach aussen vorstehenden Verstärkungselementen ergeben sich Vorteile in verschiedener Hinsicht.

Mit diesen vorzugsweise über den gesamten Umfang des Steckers sowie des Kabels vorstehenden Verstärkungselementen als Kühlrippen wird eine Erhöhung der Oberfläche des Kabels und folglich eine verbesserte Wärmeableitung erzielt, da die hohen Leistungsströme stets zu einer überdurchschnittlichen Wärmeerzeugung führen.

Diese vorstehenden Verstärkungselemente dienen auch als Schutz des Steckers sowie des Kabels gegen Abrieb, d.h. bei einem Ziehen des Elektrokabels auf dem Boden wird nicht unmittelbar sein Aussenmantel, sondern zuerst werden diese Verstärkungselemente verschlissen. Wegen der geringeren Reibung dank der kleineren Auflagefläche verringert sich zudem der Kraftaufwand, wenn das Kabel über den Boden gezogen werden muss.

Aufgrund der geringeren Erwärmung des Steckers und des Elektrokabels zumindest aussenseitig bei den Verstärkungselementen ist bei einer Berührung des Kabels durch das Bodenpersonal oder einen Benutzer ausserdem sichergestellt, dass das Elektrokabel unmittelbar nach dem Gebrauch aussen nicht derart heiss ist, dass sich der Benutzer verbrennen kann.

Gleichzeitig ergibt sich dadurch der Vorteil des Berührungsschutzes mit einer massiv geringeren Verbrennungsgefahr und dem angenehmeren Gefühl eines Benutzers in Bezug auf die Wärmebelastung beim Anfassen.

Diese Elektrokabel mit den Steckeranschlüssen werden in aller Regel vom Bodenpersonal oder von Benutzern zu der entsprechenden Steckdose gezogen und bei dieser eingesteckt. Mit der erfindungsgemässen Massnahme wird der Personenschutz zudem massiv verbessert, weil bei einer Beschädigung des Kabels immer zuerst das Massepotential, welches zu der Aussenkarosserie des Flugzeugs, des Autos oder des Motorfahrrades etc. führt, berührt wird. Damit ist der Benutzer potentialmässig geschützt.

Die Erfindung sowie weitere Vorteile derselben sind nachfolgend anhand von Ausführungsbeispielen unter Bezugnahme auf die Zeichnung näher erläutert. Es zeigt:
- Fig. 1: ein perspektivisch und im Querschnitt dargestelltes erfindungsgemässes Elektrokabel;
- Fig. 2: eine Variante des perspektivisch und im Querschnitt dargestellten Elektrokabels nach Fig. 1;
- Fig. 3: ein perspektivisch und im Querschnitt dargestelltes erfindungsgemässes Elektrokabel als verseiltes Mehrleiterkabel;
- Fig. 4: eine Variante eines im Querschnitt dargestellten Elektrokabels;
- Fig. 5: ein perspektivisch und im Querschnitt dargestelltes Elektrokabel als Variante für Frequenzen von 400 Hz;
- Fig. 6: ein perspektivisch und im Querschnitt dargestelltes Elektrokabel als typisches Antriebskabel;
- Fig. 7: eine schematische Ansicht eines durch Tragmittel aufgehängten Elektrokabels;
- Fig. 8: eine schematische Ansicht eines mit Führungselementen ausgestattetes Elektrokabel zur Führung am Boden;
- Fig. 9: eine schematische Ansicht einer durch auf dem Boden bewegbaren Halteeinrichtung mit integriertem Elektrokabel;
- Fig. 10: eine Vorderansicht eines erfindungsgemässen Steckers für ein Elektrokabel; und
- Fig. 11: eine perspektivische Ansicht einer Variante eines erfindungsgemässen Steckers für ein Elektrokabel insbesondere für Flugzeuge.

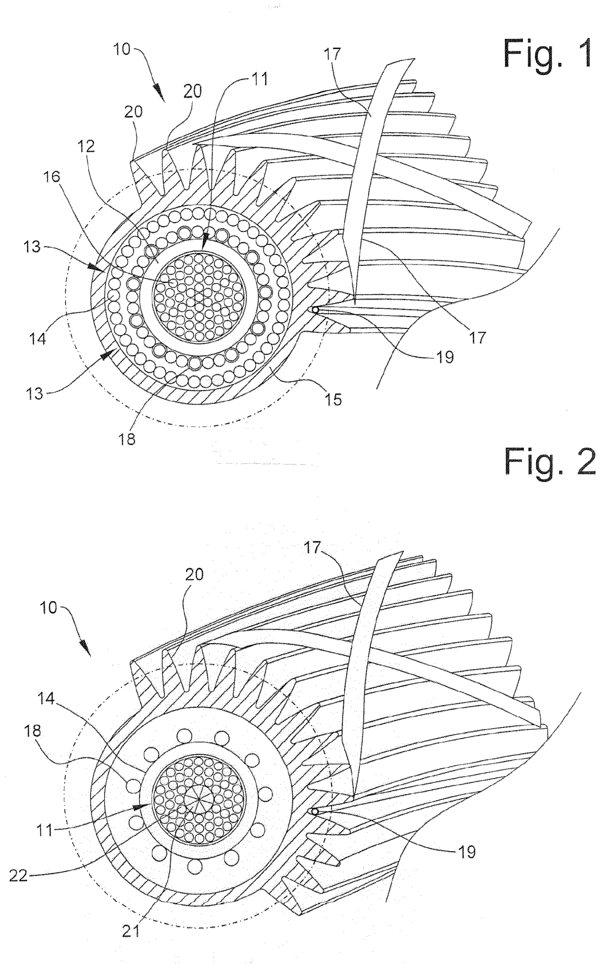

Fig. 1 zeigt ein Elektrokabel 10, welches insbesondere für die Stromversorgung von Flugzeugen, Fahrzeugen, Schiffen oder anderen Einrichtungen einsetzbar ist. Im Betriebszustand ist es für das Anschliessen an eine jeweilige Steckdose des Flugzeugs bewegbar ausgebildet. Vorteilhaft kann es auch von einer Rolle auf- bzw. abgerollt werden.

Das Elektrokabel 10 ist mit einem zentralen Stromleiter 11 mit einer Isolation 12 und einen konzentrisch um diesen angeordneten Rückleiter 13 bestehend aus einer Anzahl von miteinander verseilten Einzelleitern 14 versehen. Dieser Rückleiter 13 ist mit einem Gesamtquerschnitt dimensioniert, der annähernd demjenigen des aus Leiterdrähten 16 bestehenden Stromleiters 11 entspricht. Zudem ist ein Aussenmantel 15 vorgesehen, der aus einem ein- oder mehrschichtigen Kunststoff besteht.

Dieser zentrale Stromleiter 11 sowie der Rückleiter 13 sind aus Kupfer oder Aluminium oder einem anderen gut elektrisch leitenden Material hergestellt. Dabei werden die negativen Leiterdrähte 14 wie ein konzentrischer Schirm aussen an der Peripherie angeordnet, während die positiven Einzelleiter 16 innen vorzugsweise mit doppelter Isolation 12 geführt sind.

Wenn mit diesem Elektrokabel 10 höhere Frequenzen übertragen oder hochfrequente Ausgleichsströme geführt werden, müssen die zentralen Leiterdrähte 16 und die konzentrischen Schirm- oder Schutzleiterdrähte wegen des Skineffekts durch Einzel- oder Bündel-Isolationen auf mehrere kleinere Leiter zueinander isoliert werden, damit eine grössere Leiteroberfläche entsteht.

In dem den Stromleiter 11 konzentrisch umgebenden Rückleiter 13 sind zwischen den Einzelleitern 14 mehrere Kontrolladern 18 als Steuer- und/oder Blindadern eingebettet, welche zu Kontroll- und/oder Überwachungszwecken verwendet werden. Diese Kontrolladern 18 sind vorzugsweise in der äusseren Lage isoliert mitgeführt und weisen gegenüber dem an Masse gelegten Minusleiter nur eine geringe Spannungsdifferenz auf. Sie können auch paarweise verdrillt und so eingebettet sein, dass eine geringere Empfindlichkeit gegen elektromagnetische Störfelder erzielt wird.

Diese äusseren Einzelleiter 14 sind beim Flugzeug mit seiner AussenKarosserie (Masse) verbunden und können je nach Konfiguration geerdet sein. Dies entspricht einer an Masse gelegten Schirmung und dient sowohl der EMV Optimierung als auch dem Personenschutz, welcher durch diese Anordnung massiv verbessert ist, weil bei jeglicher Verletzung des Kabelmantels immer zuerst das Massepotential der Karosserie des Flugzeugs, Autos oder Motorfahrrades etc. berührt wird. Diese Einzelleiter 14 sind in der Regel als Minusleiter ausgelegt, da auch die Masse in der Regel am Minuspotential angeschlossen wird.

Der zentrale Stromleiter 11 könnte auch einen etwas grösseren Querschnitt als der Rückleiter 13 aufweisen, damit die stärkere Erwärmung im Stromleiter 11 kompensiert werden kann, um einen gleichmässigen symmetrischen Spannungsabfall zu erreichen.

Erfindungsgemäss sind dem Aussenmantel 15 vorzugsweise über den gesamten Umfang verteilte, nach aussen vorstehende Verstärkungselemente 20 zugeordnet, durch welche gegenüber des zylindrischen Aussenmantels eine vergrösserte Aussenfläche zwecks Erhöhung des Wärmeableitvermögens des Elektrokabels 10 gebildet ist.

Vorteilhaft sind die beim Aussenmantel 15 vorstehenden Verstärkungselemente 20 als sternenförmig von diesem wegragende Längslamellen ausgebildet, welche sich über die gesamte Kabellänge schrauben- oder mäanderförmig zwecks grösserer Flexibilität erstrecken. Diese Längslamellen sind mit einem V- oder andersförmigen Querschnitt und mit einer ausreichenden Höhe versehen, damit ihre Oberflächen ausreichend Wärme ableiten können. Sie könnten statt V-förmig jeweils auch rechteck-, pilzförmig oder ähnlich ausgebildet sein.

Das Elektrokabel 10 ist aussenseitig bei den Verstärkungselementen 20 vorzugsweise mit zusätzlichen Aussenbändern 17 oder ähnlichem umwickelt. Diese schraubenförmig verlaufenden, an den Spitzen 20' der Längslamellen anliegenden Aussenbänder 17 sind beabstandet zueinander angeordnet. Durch ihre Abstützung und Verstärkung soll der Abrieb der Längslamellen reduziert und ein Zusammendrücken derselben verhindert werden. Dies betrifft insbesondere die Längslamellen, die unterseitig auf dem Boden aufliegen. Diese Aussenbänder 17 sind daher aus einem abriebfesten Material gefertigt und enthalten zum Beispiel Polyamid- oder HDPE-Bestandteile.

In den aus Kunststoff bestehenden Aussenmantel 15 und den Verstärkungselementen 20 können vorzugsweise Graphit und/oder metallische Zusätze gleichmässig verteilt enthalten, um die Wärmeleitfähigkeit zu erhöhen.

Zudem können die wenigstens eine Isolation 12 und/oder der Aussenmantel 15 aus je einem durch Vernetzung verbesserten Kunststoff für eine thermisch erhöhte Belastbarkeit ausgelegt sein.

Ferner ist ein von aussen sichtbarer Lichtleiter 19 zwischen zwei Verstärkungselementen 20 geführt, um Betriebszustände, Betriebsinformationen und/oder um das Elektrokabel im Dunkeln sichtbar zu machen. Selbstverständlich könnten je nach Anwendung auch zwei oder mehrere beispielsweise gegenüberliegende Lichtleiter 19 vorgesehen sein.

Fig. 2 zeigt ein Elektrokabel 10', welches an sich gleich ausgebildet ist wie dasjenige nach Fig. 1 und daher nicht mehr in allen Einzelheiten erläutert ist. Als einziger Unterschied ist im Zentrum des Stromleiters 11' eine Schlauchleitung 21 eingebettet, um das Elektrokabel mit einem durch diese gepumptes Medium, vorzugsweise Luft, zu kühlen. Diese Schlauchleitung 21 ist mit inneren Stegen 22 verstärkt und sie ist endseitig beim Elektrokabel 10' an eine Pumpe angeschlossen. Selbstverständlich könnten bei Bedarf auch mehrere solcher Schlauchleitungen 21 in dem Elektrokabel eingebettet sein.

Die Schicht mit den Verstärkungselementen bzw. Kühlrippen kann auch in Form eines Schrumpfschlauches nachträglich auf das fertige Kabel aufgebracht werden. Dieser Schrumpfschlauch kann mit oder ohne Kleber versehen sein und wird dort angebracht, wo zusätzliche Kühlung durch verbesserte Wärmeabgabe erwünscht ist.

Diese Verstärkungselemente 20 können nur als Kühlrippen oder auch für nicht thermische Erhöhung der Oberfläche vorgesehen sein, bei dem sie lediglich als mechanische Schutzfunktion und zur Reduzierung der Reibungskräfte dienen. In diesem Falle sind die Aussenflächen der Verstärkungselemente 20 insbesondere bei den Spitzen 20' aus einer ein- oder vorzugsweise mehrlagigen Schicht mit unterschiedlichen Farben gebildet, um damit die Abriebstärke des Elektrokabels zu visualisieren.

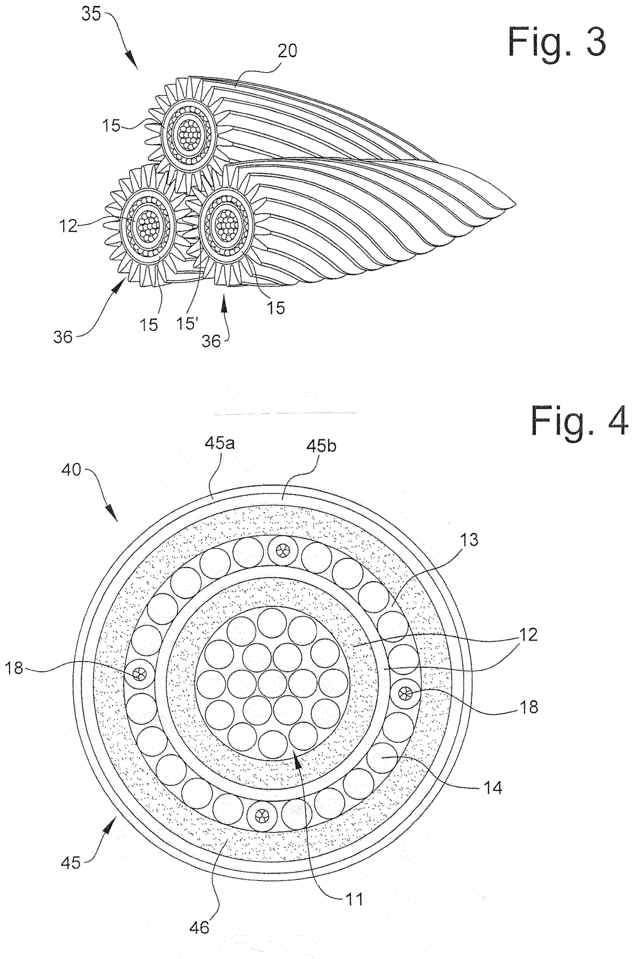

In Fig. 1 bzw. in Fig. 2 sind diese Verstärkungselemente 20 nicht über den gesamten Umfang dargestellt, wobei diese aber vorteilhaft rundum vorgesehen sein sollten, wie in Fig. 3 ersichtlich ist.

Fig. 3 zeigt ein Mehrleiterkabel 35 mit einzelnen Elektrokabeln 36, welche jeweils an sich gleich wie diejenigen nach Fig. 1 ausgestaltet sind, und daher nachfolgend nurmehr die Unterschiede erläutert sind. Diese drei einzelnen Elektrokabel 36 sind vorteilhaft miteinander verseilt und sie weisen jeweils nur über einen Teil des Aussenumfangs Verstärkungselemente 20 auf. In dem sich gegenseitig berührenden Bereich 15' dieser einzelnen Elektrokabel 36 sind diese Verstärkungselemente 20 weggelassen, wodurch diese Elektrokabel 36 mit ihren Aussenmänteln 15 gegenseitig in Kontakt stehen. Dies hat den Vorteil, dass das aus diesen gebildete Mehrleiterkabel 35 mit einem kleineren Aussendurchmesser dimensioniert sein kann als wenn die Einzelkabel rundum solche Verstärkungselemente aufweisen würden.

Im Prinzip könnten die einzelnen Elektrokabel aber auch wie bei demjenigen nach Fig. 1 ausgestaltet und entsprechend rundum mit diesen Verstärkungselementen 20 versehen sein.

Bei dem Elektrokabel 40 gemäss Fig. 4 ist anstelle von diesen nach aussen vorstehenden Verstärkungselementen 20 ein mehrschichtiger Aussenmantel 45 mit einer zylindrischen Aussenfläche vorgesehen. Im Rahmen der Erfindung setzt sich dieser Aussenmantel 45 vorzugsweise wiederum aus zwei Schichten zusammen, namentlich aus einer äusseren Schicht 45a aus einem wärmeleitenden Kunststoff und einer inneren Schicht 45b, welche aus verschiedenartigen Materialien hergestellt sein können, sowie aus einer weiteren Schicht 46, die aus einem PCM-Material (Phase Change Material) gefertigt sein kann.

Ansonsten ist dieses Elektrokabel 40 ähnlich wie dasjenige nach Fig. 1 ausgestaltet. Es weist einen Stromleiter 11, einen konzentrisch umgebenden Rückleiter 13 mit Einzelleitern 14 und den Aussenmantel 45 auf. Zudem ist eine mehrschichtige dicke Isolation 12 zwischen dem Stromleiter 11 und dem Rückleiter 13 vorgesehen, welche den positiven Leiter gegenüber dem Schirm- oder Schutzrückleiter zuverlässig isoliert.

Der sich über die Kabellänge erstreckende Kältespeicher 46, zum Beispiel bestehend aus einem PCM-Granulat, welcher innerhalb eines kurzen Zeitraums eine hohe Wärmemenge aufnehmen kann, ermöglicht, dass das Elektrokabel beim Gebrauch Hitzebelastungen ausgleichen kann.

Die Schichten 45a, 45b des Aussenmantels 45 können ebenso aus einer ein- oder mehrlagigen Schicht mit unterschiedlichen Farben gebildet, um damit die Abriebstärke des Elektrokabels zu visualisieren.

Vorteilhaft ist wenigstens ein Sensor zwecks Temperaturmessung in wenigstens einem Leiter 18 oder im Stecker am Kabelende integriert, was nicht näher dargestellt ist. Mittels dieser während dem Aufladen messbaren Temperatur kann die Stromleistung des Elektrokabels in dem Sinne geregelt werden, dass eine festgelegte Maximaltemperatur im Elektrokabel bzw. im anfangs- und/oder endseitigen Stecker nicht überschritten wird.

Es kann auch ein sich über die Kabellänge erstreckender drahtförmiger Sensor zur Ermittlung der Wärme integriert sein, mittels dem analog geregelt oder ein vorübergehendes Abschalten der Stromzufuhr bewirkt werden könnte.

Alternativ könnte ein anfangs- und/oder endseitiger Stecker mit integriertem Temperaturschalter vorgesehen sein, durch welchen bei Überschreitung einer Grenztemperatur die Stromleistung reduziert würde.

Gegenüber der Lösung mit zwei einzelnen Kabeln für eine Gleichstromübertragung kann zudem die Gefahr der Entstehung eines zu starken Magnetfelds vermieden werden, welches zu einer Magnetisierung der angrenzenden Eisenteile bei Trasses, in einer Betonarmierung oder ähnlichem führen könnte.

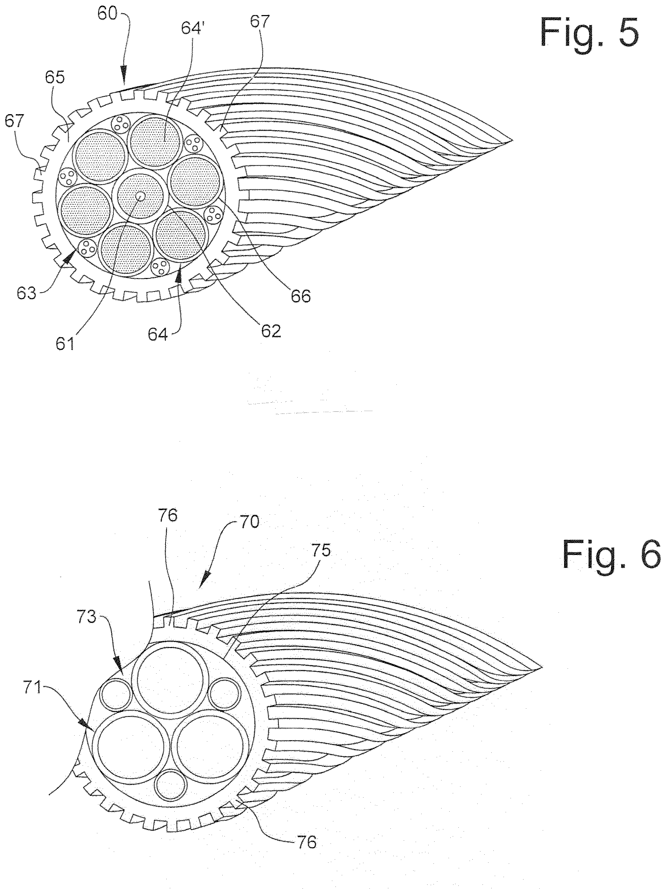

Fig. 5 zeigt ein Elektrokabel 60, welches sich für die Anwendung bei einer hohen Frequenz, wie von 400 Hz eignet. Es ist mit einem oder mehreren zentralen Stromleitern 61 mit je einer Isolation 62 und konzentrisch um diese angeordnete Leiter bestehend aus einer Anzahl von um den zentralen Stromleiter verseilten Einzelleitern 64, die jeweils aus einer Anzahl von verlitzten Drähten 64' und einer Isolation 66 gebildet sind. Zusätzlich sind Spickelleiter 63 aus Einzelleitern zwischen den Rückleitern vorgesehen, die zu Messungs-, Steuerungs- und/oder Regelungszwecken verwendbar sind. Diese Einzelleiter 64 und die Spickelleiter 63 sind von einem ein- oder mehrschichtigen Aussenmantel 65 umgeben.

Erfindungsgemäss sind dem Aussenmantel 65 über den gesamten Umfang verteilte, nach aussen vorstehende Verstärkungselemente 67 zugeordnet, welche im Querschnitt jeweils eine annähernd rechteckige Form aufweisen. Mit diesen als Kühl-und Verstärkungsrippen ausgebildeten Verstärkungselementen 67 ist das thermische Verhalten optimiert und es wird eine Verminderung der Reibungskräfte erzielt. Vorteilhaft verlaufen diese Verstärkungselemente 67 schrauben- oder mäanderförmig um das Elektrokabel.

Fig. 6 zeigt ein Elektrokabel 70, welches typischerweise als Motorenkabel oder Versorgungskabel verwendet wird und als Mehrleiterkabel mit einzelnen Elektrokabeln 71 hergestellt ist, so ähnlich wie das Mehrleiterkabel 35. Es sind daher nachfolgend nurmehr die Unterschiede zu diesem dargetan. Bei den Elektrokabeln 71 sind aussen noch zwischen diesen Spickelleiter 73 oder ähnlichem mitverseilt. Der Aussenmantel 75 umhüllt dabei die drei Elektrokabel 71 und die Spickelleiter 73 rohrförmig.

Erfindungsgemäss sind dem Aussenmantel 75 vorteilhaft über den gesamten Umfang verteilte, nach aussen vorstehende Verstärkungselemente 76 zugeordnet, welche im Querschnitt jeweils eine annähernd rechteckige Form aufweisen. Damit sind diese Verstärkungselemente 76 ähnlich wie diejenigen bei dem Elektrokabel 60 nach Fig. 5 ausgestaltet und ergeben sich hinsichtlich Thermik und Reibung dieselben Vorteile.

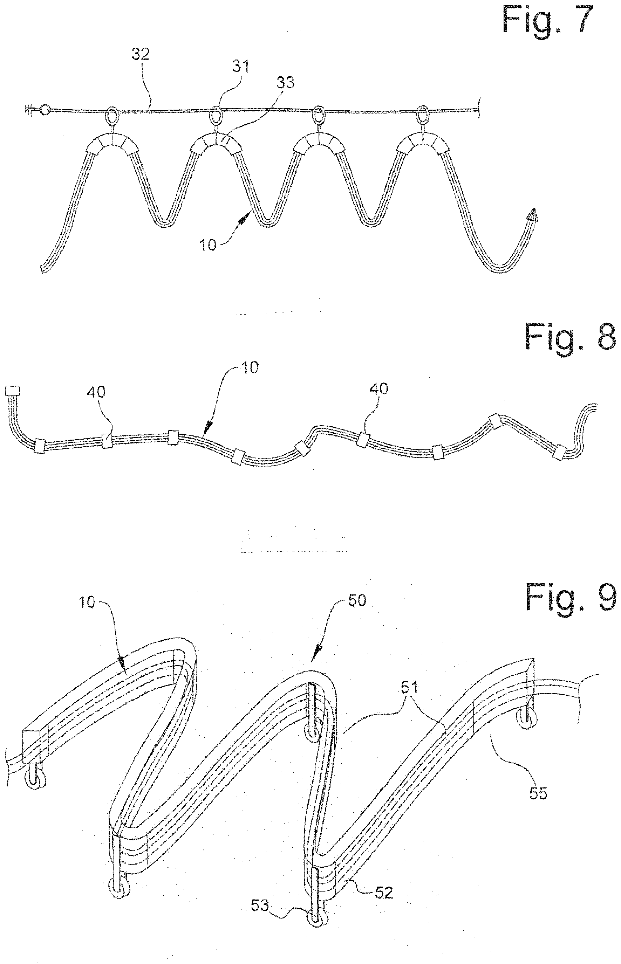

Gemäss Fig. 7 ist das Elektrokabel 10 für seine Bewegbarkeit zum Anschliessen an eine Steckdose beim Flugzeug etc. mit Tragmitteln 31 an einem Längselement 32 zur Führung in der Luft aufgehängt. Auf diese Weise ergibt sich bei diesem eine bessere Kühlung und ein geringerer Verschleiss. Es sind mehrere solcher Tragmittel 31 beabstandet zueinander durch Halterungen 33 am Elektrokabel 10 befestigt und längsverschiebbar an dem Längselement 32 gehalten. Bei dieser Anwendung sind beim Elektrokabel 10 keine Aussenbänder erforderlich.

Fig. 8 zeigt eine Variante, bei der das Elektrokabel 10 für seine Bewegbarkeit zum Anschliessen an eine Steckdose beim Flugzeug etc. mit Führungselementen 41 zur Führung am Boden versehen ist, wie zum Beispiel mit Hartkunststoff-Gleitringen. Die Führungselemente 41 könnten auch auf der Unterseite auf Rollen gelagert sein.

Gemäss Fig. 9 ist das Elektrokabel 10 in eine längliche Halteeinrichtung 50 eingelegt, welche schlangenförmig auf einem Boden 55 oder in der Luft bewegbar ist und damit das Kabel ebenfalls von einer zurückgezogenen in eine Ladeposition und umgekehrt verschoben werden kann. Diese Halteeinrichtung 50 besteht aus einem kastenförmigen Längsgehäuse 51 mit biegbaren Gelenkstellen 52 und aus auf der Unterseite desselben gelagerten Rollen 53, durch welche das Längsgehäuse 51 auf dem Boden 55 mit wenig Kraftaufwand verfahrbar ist. Dieses Längsgehäuse 51 könnte auch durchlüftet sein, um das Elektrokabel 10 zusätzlich zu kühlen, oder die Wandungen des Längsgehäuses könnten auch perforiert sein, um Luft durchzulassen.

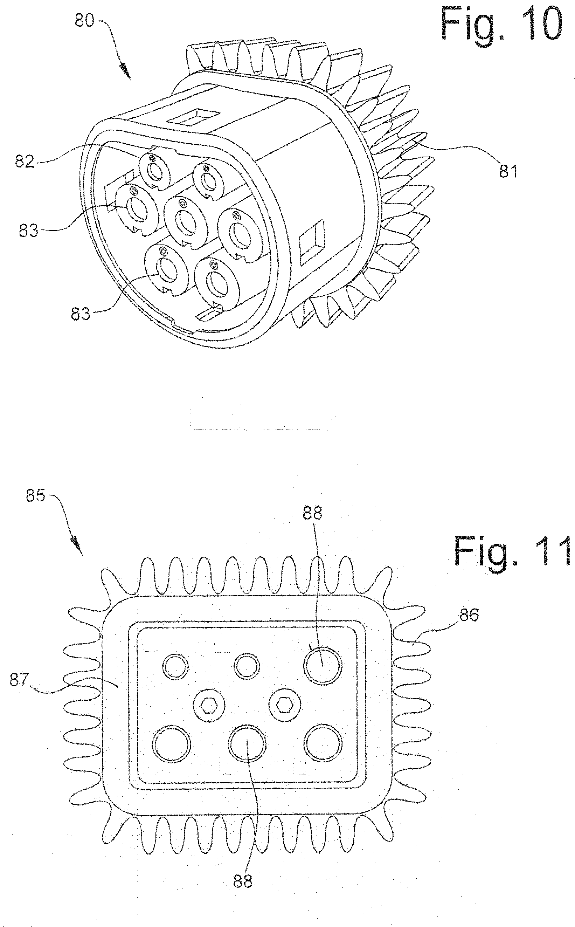

Fig. 10 und Fig. 11 zeigen jeweils einen Stecker 80, 85 für ein erfindungsgemässes Elektrokabel nach Fig. 1 bis Fig. 6. Dieser jeweilige Stecker 80, 85 ist wie beim Elektrokabel 10, 10' auf der Aussenseite seines Gehäuses 82, 87 mit solchen Verstärkungselementen 81, 86 mit rippenartiger Struktur nach aussen vorstehend ausgebildet, damit die Steifigkeit beim Stecker erhöht wird. Diese Verstärkungselemente 81, 86 sind dabei über eine gewisse Länge vorstehend zum jeweiligen Gehäuse 82, 87 angeordnet, wobei der in die Steckdose einsteckbare Gehäuseteil mit den Einzelsteckern 83, 88 selbstverständlich ohne diese Verstärkungselemente versehen ist.

Man erreicht mit diesen zudem als Kühlrippen wirkenden Verstärkungselementen 81, 86, dass die Berührungstemperatur an den Rippen ebenfalls deutlich tiefer ausfällt, bei vorausgesetzter gleicher Leistung, als bei einem Stecker ohne Kühlverstärkung. Damit können Verbrennungen beim Benutzer verhindert werden.

Diese Verstärkungselemente 81, 86 können alternativ mit einem relativ weichen gummiartigen Material hergestellt sein. Damit erhöht sich die Dämpfwirkung, wenn der Stecker zum Beispiel auf den Boden fallengelassen wird. Das Innere der Stecker wird vorzugsweise ausgegossen, um eine möglichst gute Wärmeleitfähigkeit vom Kontakt bis zur Oberfläche zu erreichen.

Die Stecker können zusammen mit dem Kabel selbstverständlich sowohl für mittlere als auch grössere Stromkapazitäten ausgelegt sein, bei denen es sich unter anderem um Schnellladekabel handelt. Die Stecker bestehen dabei aus zwei nebeneinander angeordneten Steckergehäusen mit entsprechenden Einzelsteckern, die zusammen als ein Gehäuse mit Verstärkungselementen, wie Rippen, nach aussen vorstehend ausgebildet sind, wie diese in Fig. 11 angedeutet sind.

Die Erfindung ist mit den obigen Ausführungsbeispielen ausreichend dargetan. Sie könnte aber selbstverständlich noch durch andere Varianten veranschaulicht sein. So könnten mehrere zum Beispiel seilförmig zueinander verwundene Stromleiter im Innern des Kabels enthalten sein.

## Patentansprüche

1. Stecker für ein Elektrokabel für die Stromversorgung von Flugzeugen, Schienenfahrzeugen, Kraftfahrzeugen, Schiffen oder anderen Einrichtungen, wobei der Stecker (80, 85) mit einem Gehäuse (82, 87) mit einem in eine Steckdose einsteckbaren Gehäuseteil mit Einzelsteckern (83, 88) versehen und das Elektrokabel (10, 40) als Ein- oder Mehrleiterkabel ausgebildet ist, bei dem ein oder mehrere Stromleiter (11) mit wenigstens einer Isolation (12) sowie ein ein- oder mehrschichtiger Aussenmantel (15) vorgesehen sind, wobei dem Aussenmantel (15) des Elektrokabels (10, 40) vorzugsweise über den gesamten Umfang verteilte, nach aussen vorstehende Verstärkungselemente (20) zugeordnet sind und/oder dass der Aussenmantel (45) aus mehreren Schichten (45a, 45b, 46) besteht, **dadurch gekennzeichnet, dass**
auf der Aussenseite des Gehäuses (82, 87) des jeweiligen Steckers (80, 85) Verstärkungselemente (81, 86) mit einer rippenartigen Struktur nach aussen zum jeweiligen Gehäuse (82, 87) vorstehend angeordnet sind, wobei der in die Steckdose einsteckbare Gehäuseteil mit den Einzelsteckern (83, 88) ohne diese Verstärkungselemente ausgebildet ist.

2. Stecker nach Anspruch 1, **dadurch gekennzeichnet, dass** die Verstärkungselemente (81, 86) mit der rippenartigen Struktur über eine gewisse Länge zum jeweiligen Gehäuse (82, 87) und über den gesamten Umfang des Aussenmantels verteilt vorstehend angeordnet sind.

3. Stecker nach Anspruch 1 oder 2, **dadurch gekennzeichnet, dass** wenigstens ein Sensor für eine Temperaturmessung integriert ist, mittels dem die Stromleistung zur Limitierung der Maximaltemperatur im Elektrokabel regelbar ist.

4. Stecker nach Anspruch 3, **dadurch gekennzeichnet, dass** durch die Regelung eine festgelegte Maximaltemperatur im Elektrokabel bzw. in ihm nicht überschritten wird.

5. Stecker nach einem der vorhergehenden Ansprüche 1 bis 4, **dadurch gekennzeichnet, dass**
im Stecker ein Temperaturschalter integriert ist, durch welchen bei Überschreitung einer Grenztemperatur die Stromleistung des Elektrokabels reduzierbar ist.

6. Stecker nach einem der vorhergehenden Ansprüche 1 bis 5, **dadurch gekennzeichnet, dass**
die als Kühlrippen wirkenden Verstärkungselemente (81, 86) bewirken, dass die Berührungstemperatur an den Rippen tiefer ausfällt, bei vorausgesetzter gleicher Leistung, als bei einem Stecker ohne Kühlverstärkung, um Verbrennungen beim Benutzer zu verhindern.

7. Stecker nach einem der vorhergehenden Ansprüche 1 bis 6, **dadurch gekennzeichnet, dass**
mit diesen Verstärkungselementen (81, 86) gegenüber dem Aussenmantel (15) eine vergrösserte Aussenfläche gebildet ist, durch welche das Wärmeableitvermögen des Steckers (80, 85) erhöht wird.

8. Stecker nach einem der vorhergehenden Ansprüche 1 bis 7, **dadurch gekennzeichnet, dass**
die beim Aussenmantel vorstehenden Verstärkungselemente (81, 86) beim Gehäuse (82, 87) als sternenförmig von diesem wegragende Längslamellen ausgebildet sind, welche auf den Aussenmantel aufschrumpfbar sind.

9. Stecker nach Anspruch 8, **dadurch gekennzeichnet, dass** diese Längslamellen mit einem V- oder andersförmigen Querschnitt versehen sind und sich schrauben- oder mäanderförmig entlang des Elektrokabels erstrecken.

10. Stecker nach einem der vorhergehenden Ansprüche 1 bis 9, **dadurch gekennzeichnet, dass**
die beim Aussenmantel vorstehenden Verstärkungselemente (81, 86) mit zusätzlichen Aussenbändern (17) oder ähnlichem umwickelt sind.

11. Elektrokabel mit wenigstens einem Stecker nach einem der vorhergehenden Ansprüche 1 bis 10, **dadurch gekennzeichnet, dass**
ein zentraler, aus Leiterdrähten (16) bestehender Stromleiter (11) mit wenigstens einer Isolation (12), ein konzentrisch um diesen angeordneten Rückleiter (13) bestehend aus einer Anzahl von miteinander verseilten Einzelleitern (14) und mehrere zwischen den Einzelleitern (14) eingebettete Kontrolladern (18) als Steuer- und/oder Blindadern sowie ein Aussenmantel (15) vorgesehen ist, wobei das Elektrokabel (10, 40) als ein Einleiterkabel ausgebildet ist, wobei die Einzelleiter (14) des Rückleiters (13) mit einem Gesamtquerschnitt dimensioniert sind, der annähernd demjenigen des aus den Leiterdrähten (16) bestehenden Stromleiters (11) entspricht, und wobei dem Aussenmantel (15) über den gesamten Umfang verteilte, nach aussen vorstehende Verstärkungselemente (20) zugeordnet sind, oder der Aussenmantel (45) aus mehreren Schichten (45a, 45b, 46) besteht.

12. Elektrokabel nach Anspruch 11, **dadurch gekennzeichnet, dass** dass um diesen einen oder um diese mehreren zentralen Stromleiter (11) konzentrisch angeordnete Rückleiter (13) bestehend aus einer Anzahl von Einzelleitern (14) vorgesehen sind, wobei der aus blanken oder einzeln oder bündelweise isolierten Einzelleitern (14) aufgebaute Rückleiter (13) mit einem Gesamtquerschnitt dimensioniert ist, der annähernd demjenigen des aus blanken, für höhere Frequenzen einzeln oder gruppenweise isolierten Leiterdrähten (16) bestehenden Stromleiters (11) entspricht.

13. Elektrokabel nach Anspruch 11 oder 12, **dadurch gekennzeichnet, dass**
die Aussenflächen der Verstärkungselemente (20) aus einer ein- oder mehrlagigen Schicht mit unterschiedlichen Farben gebildet sind, um damit die Abriebstärke des Elektrokabels zu visualisieren.

14. Elektrokabel nach einem der vorhergehenden Ansprüche 11 bis 13, **dadurch gekennzeichnet, dass**
ein sich über die Kabellänge erstreckender Kältespeicher zum Beispiel bestehend aus einem PCM-Granulat enthalten ist, welcher innerhalb eines kurzen Zeitraums eine hohe Wärmemenge absorbieren und speichern kann, damit das Elektrokabel beim Gebrauch Hitzebelastungen ausgleichen kann.

15. Elektrokabel nach einem der vorhergehenden Ansprüche 11 bis 14, **dadurch gekennzeichnet, dass**
das Elektrokabel (10, 10') für seine Bewegbarkeit zum Anschliessen an eine Steckdose beim Flugzeug etc. mit Tragmitteln (31) an einem Längselement (32) zur Führung in der Luft aufhängbar ist, oder mit Führungselementen (41) oder mit einer auf dem Boden bewegbaren Halteeinrichtung (50) zur Führung am Boden (55) versehen ist.
